# EUROPÄISCHE PATENTANMELDUNG

(11) **EP 1 231 759 A2**
(43) Veröffentlichungstag der Anmeldung: **14.08.2002**
(21) Anmeldenummer: 01127026.1
(22) Anmeldetag: 14.11.2001
(51) Int. Cl.: H04M 1/247

(54) **Menügesteuertes Gerät**

(30) Priorität: 09.02.2001 DE 10105950
(71) Anmelder: Tenovis GmbH & Co. KG, 60326 Frankfurt am Main (DE)
(72) Erfinder: Schmidt, Thorsten, 61118 Bad Vilbel (DE)
(74) Vertreter: Leson, Thomas Johannes Alois, Dipl.-Ing.

(57) **Zusammenfassung**

Gezeigt wird ein menügesteuertes Gerät mit einer Anzeigeeinrichtung zur Anzeige eines Menüpunkte und einer Eingabeeinrichtung mit einer Mehrzahl von Auswahltasten. Durch Betätigung der Eingabeeinrichtung wird ein durch einen Menüplan festgelegter anderer Menüpunkt zur Anzeige gebracht. Hierzu wird vorgeschlagen, dass der Menüplan geändert werden kann. Diese Änderungen erfolgen vorzugsweise durch Eingaben des Benutzers an der Eingabeeinrichtung. Eine Änderung des Menüplans kann durch eine Änderung der Reihenfolge der Menüpunkte des Menüplanes, durch eine Änderung der Menüebene der Menüpunkte, durch das Weglassen von Menüpunkten, durch das Hinzufügen von Menüpunkten oder durch die Umbenennung der Menüpunkte erfolgen. Selbstverständlich kann der Menüplan durch eine oder eine beliebige Anzahl der genannten Maßnahmen geändert werden.

## Beschreibung

Die Erfindung bezieht sich auf ein menügesteuertes Gerät, dessen Funktionen mit Hilfe eines Menüs gewählt werden.

Menüsteuerungen sind heutzutage bei einer Vielzahl von Geräten das Mittel der Wahl, um eine Vielzahl von Funktionen für den Benutzer des Gerätes zugänglich zu machen. Der Benutzer wählt zu diesem Zweck mit einer ggf. speziell hierfür vorgesehenen Taste ein Menü und kann sich dann mit sogenannten Auswahltasten frei in dem Menü bewegen, bis er am Ende des Menüs die gewünschte Funktion gefunden hat.

Insbesondere Kommunikationsgeräte wie Telefone, Handys, Nebenstellenanlagen, Faxgeräte und ähnliche Geräte verfügen heutzutage über eine solche Vielzahl von Funktionen, dass deren Auffinden selbst mit Hilfe eines guten Menüs oft schwierig ist.

Besondere Schwierigkeiten treten dabei häufig bei Geräten auf, die nur über eine kleine Anzeigeeinrichtung verfügen, und deshalb stets nur einen einzelnen Menüpunkt eines Menüs darstellen können. Hierdurch wird das Gesamtmenü für den Benutzer verhältnismäßig unübersichtlich.

Bei Geräten dieser Art steht darüber hinaus oft nur ein sehr begrenzter Platz für die Benennung des Menüpunktes zur Verfügung, wobei die hierbei gewählten Schlagworte häufig mehrdeutig oder irreführend sind.

Mit der Erfindung soll ein menügesteuertes Gerät vorgeschlagen werden, dessen Bedienbarkeit verbessert ist.

Diese Aufgabe wird durch ein menügesteuertes Gerät mit den im Patentanspruch 1 angegebenen Merkmalen gelöst.

Wie im Oberbegriff des Patentanspruchs 1 angegeben, bezieht sich die Erfindung auf ein menügesteuertes Gerät mit einer Anzeigeeinrichtung zur Anzeige eines Menüpunktes und einer Eingabeeinrichtung mit einer Mehrzahl von Auswahltasten. Durch Betätigung der Eingabeeinrichtung kann ein durch einen Menüplan festgelegter anderer Menüpunkt zur Anzeige gebracht werden. Der Menüplan solcher Geräte ist nun in der Regel werkseitig vorgegeben, so dass die Bedienbarkeit des menügesteuerten Gerätes von der Qualität des Menüplans abhängt.

Um die Bedienbarkeit eines solchen Gerätes zu erhöhen, wird daher vorgeschlagen, den Menüplan des Gerätes zugänglich zu halten, so dass dieser geändert werden kann.

Durch die Änderbarkeit des Menüplans lässt sich dieser auf vielfältige Art und Weise an die Bedürfnisse des Benutzers anpassen.

So kann der Menüplan beispielsweise durch eine Änderung der Reihenfolge der Menüpunkte des Menüplans geändert werden. Dieses Merkmal gibt dem Benutzer die Möglichkeit, für ihn wichtige und häufig benötigte Menüpunkte in den Vordergrund des Menüs zu rücken.

Darüber hinaus kann der Menüplan durch eine Änderung der Menüebene von Menüpunkten geändert werden. Häufig benötigte Funktionen einer untergeordneten Menüebene können dabei in eine höhere Menüebene gehoben werden. Auch durch diese Änderung wird die Bedienbarkeit des menügesteuerten Gerätes verbessert.

Eine weitere Möglichkeit sieht vor, den Menüplan durch das Weglassen von einzelnen Menüpunkten zu verändern. Dies gibt dem Benutzer die Möglichkeit, von ihm nicht benötigte Menüpunkte komplett aus dem Menü zu entfernen, wodurch ebenfalls die Übersichtlichkeit des gesamten Menüplans verbessert wird.

Eine weitere Möglichkeit sieht vor, dass der Menüplan durch weitere Menüpunkte erweitert wird. Dabei handelt es sich bevorzugt um solche Menüpunkte, die bereits in einem der Untermenüs enthalten sind, die aber gleichzeitig auch in einer höheren Menüebene zugänglich sein sollen. Handelt es sich dabei beispielsweise um eine Funktion wie die Einstellung der Lautstärke des Ruftons, kann der Benutzer den leisesten und den lautesten Rufton bereits in der höchsten Menüebene einstellen, wohingegen er, wenn er eine feinere Einstellung der Lautstärke des Ruftons wünscht, dann in einer niedrigeren Menüebene des entsprechenden Untermenüs die entsprechend feinere Einstellung vornehmen kann. Auch hierdurch kann die Bedienbarkeit des Gerätes verbessert werden.

Schließlich ist noch vorgesehen, dass der Benutzer die einzelnen Menüpunkte auch umbenennen kann. Sperrige oder nichtssagende Bezeichnungen für einzelne Menüpunkte, deren Bedeutung bei seltener Benutzung dieses Menüpunktes häufig rasch wieder in Vergessenheit gerät, kann durch Umbenennung eine Bezeichnung gegeben werden, die sich der jeweilige Benutzer besser merken kann. Selbstverständlich kann der Benutzer bei der Änderung des Menüs bedarfsweise von einer beliebigen Kombination der aufgeführten Möglichkeiten Gebrauch machen.

Eine erste vorteilhafte Weiterbildung des erfindungsgemäßen Gerätes kann darin gesehen werden, dass das Gerät wahlweise nach einem von einer Mehrzahl von unterschiedlichen Menüplänen arbeiten kann. Diese Weiterbildung eröffnet einem Benutzer die Möglichkeit, den für seinen jeweiligen Bedarf am besten angepassten Menüplan heranzuziehen oder aber die Benutzung ein und desselben Gerätes durch unterschiedliche Benutzer mit jeweils einem für diesen Benutzer vorgegebenen Menüplan.

Die Möglichkeit, den Menüplan zu ändern, könnte aber gegebenenfalls auch den einen oder anderen Benutzer überfordern, so dass der entsprechende Versuch, den Menüplan zu ändern, scheitert. Das Gerät wäre in dem Fall nicht mehr funktionsfähig. Für diesen Fall ist als Weiterbildung vorgesehen, dass mittels der Eingabeeinrichtung jederzeit auf den werksseitigen ursprünglichen Menüplan zurückgegriffen werden kann. Diese Möglichkeit hat darüber hinaus den Vorteil, dass bei einem Verkauf des Gerätes dieses im ursprünglichen Zustand übergeben werden kann, da ein anderer Benutzer des Gerätes mit einem von dem vorherigen Benutzer geänderten Menüplan in der Regel wenig anfangen kann, und auch die Bedienungsanleitung des Gerätes für den geänderten Menüplan selbstverständlich nicht mehr zutreffend ist.

Gemäß einer weiteren Weiterbildung der Erfindung kann bei Geräten, die durch eine Mehrzahl von unterschiedlichen Benutzern verwendet werden, auch die vom Benutzer jeweils eingegebene persönliche Identifikationsnummer (PIN) dazu verwendet werden, einen von dem jeweiligen Benutzer gewünschten Menüplan dann automatisch zur Verfügung zu stellen.

Eine weitere vorteilhafte Weiterbildung der Erfindung sieht vor, dass ein durch einen Benutzer geänderter Menüplan automatisch auf seine Ausführbarkeit überprüft wird, damit etwaige Fehler bei der Aufstellung des Menüplans schnell erkannt und behoben werden können.

Die Erfindung wird nachfolgend anhand von Ausführungsbeispielen näher erläutert.

Die Figur 1 zeigt ein menügesteuertes Gerät.

Die Figur 2 zeigt die Darstellung eines Menüpunktes auf der Anzeigeeinrichtung und die hierbei bestehenden Auswahlmöglichkeiten.

Die Figur 3 zeigt ein Beispiel für ein werksseitig vorgegebenes Menü.

Die Figur 4 zeigt einen Menüplan.

Die Figur 5 zeigt das in der Figur 3 gezeigte Menü in einer von einem Benutzer geänderten Version.

Die Figur 6 zeigt ein zweites Ausführungsbeispiel für ein von einem Benutzer geändertes Menü.

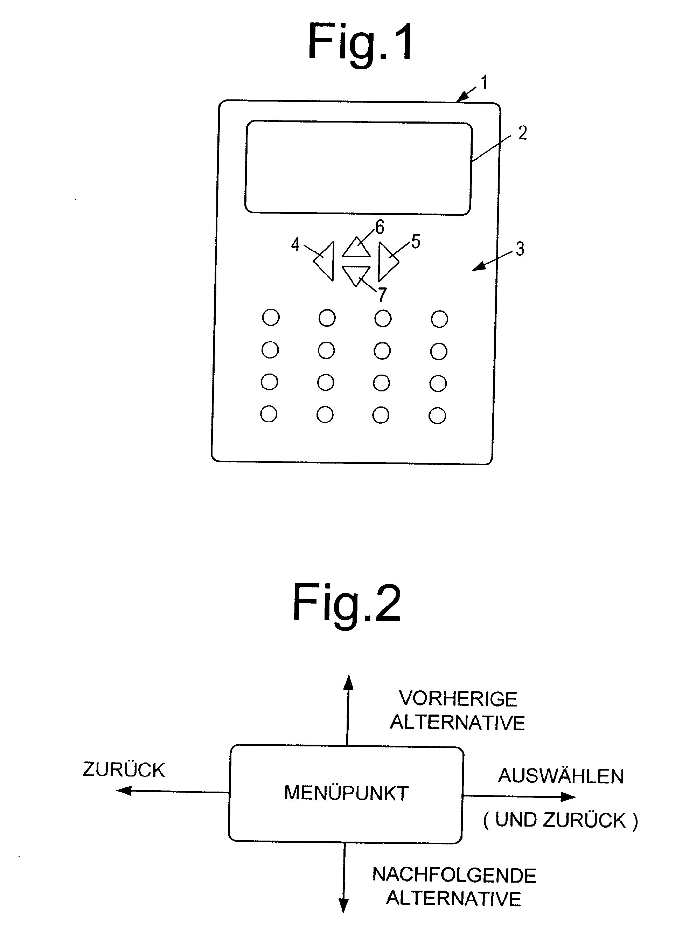

Die Figur 1 zeigt ein menügesteuertes Gerät 1 mit einer Anzeigeeinrichtung 2, einer Eingabeeinrichtung 3, einer Auswahltaste 4 (zurück), einer Auswahltaste 5 (up), einer Auswahltaste 6 (down) und einer Auswahltaste 7 (Auswählen).

Bei dem in Figur 1 gezeigten Gerät 1 handelt es sich um ein Handy, bei dem die Funktionen des Gerätes mittels eines auf der Anzeigeeinrichtung 2 sequentiell dargestellten Menüs mit Hilfe der Auswahltasten 4, 5, 6 und 7 gewählt werden können.

Die Erfindung kann jedoch nicht nur bei dem in Figur 1 gezeigten Handy eingesetzt werden. Grundsätzlich kommt hierfür jedes menügesteuerte Gerät in Frage, bei dem die Anzeigeeinrichtung lediglich zur Darstellung eines einzelnen Menüpunktes ausreicht. Beispiele für Geräte dieser Art sind Telefone aller Art, Faxgeräte, kleinere Nebenstellenanlagen, Fotoapparate oder ähnliches.

Anhand von Figur 2 wird nunmehr erläutert, wie sich der Benutzer des in Figur 1 gezeigten Gerätes innerhalb eines Menüs bewegen kann.

Nach Aufruf des Menüs erscheit ein erster Menüpunkt in der Anzeigeeinrichtung 2 des Handys 1. Durch Betätigung der Taste 7 gelangt der Benutzer des Gerätes zu einer nachfolgenden Alternative zu dem zuvor auf der Anzeigeeinrichtung 2 dargestellten Menüpunkt und kann sich durch weitere Betätigungen der Auswahltaste 7 nacheinander alle Möglichkeiten einer Menüebene des Menüs ansehen.

Durch mehrmalige Betätigung der Auswahltaste 7 bekommt er die Alternativen einer Menüebene in der in einem Menüplan festgelegten Reihenfolge, wohingegen er diese Alternativen auch in der umgekehrten Reihenfolge durch Betätigung der Auswahltaste 6 erhalten kann. Hat der Benutzer dann die von ihm gewünschte Alternative gefunden, kann er durch Betätigung der Auswahltaste 5 das Untermenü zu der gewählten Alternative auswählen und zur Anzeige bringen. Innerhalb dieses Untermenüs, das eine Hierarchiestufe unter dem vorhergehenden Menü liegt, kann er sich wieder durch Betätigung der Auswahltasten 6 oder 7 sämtliche Alternativen ansehen, bis er die richtige gefunden hat.

Sobald er die richtige Alternative gefunden hat, kann er diese wieder durch Betätigung der Auswahltaste 5 auswählen. Hierdurch gelangt er entweder in ein weiteres Untermenü oder aber die zuvor angezeigte Alternative ist bereits mit einer Funktion verknüpft, was zur Ausführung dieser Funktion führt und die Anzeigeeinrichtung wieder auf den vorhergehenden Menüpunkt zurücksetzt.

Ist in dem gewählten Untermenü keine der enthaltenen Alternativen, d.h. der enthaltenen Menüpunkte mit der Funktion verbunden, die der Benutzer wünscht, kann er durch Betätigung der Auswahltaste 4 auch wieder in das vorhergehende Menü zurückkehren.

In dem vorhergehenden Menü kann der Benutzer entweder durch Betätigung der Auswahltasten 6 oder 7 einen anderen Menüpunkt auswählen, oder aber durch nochmalige Betätigung der Auswahltaste 4 das Menü verlassen.

Bei der zuvor angegebenen Vorgehensweise kann gleichzeitig mit dem Menüpunkt oberhalb der Auswahltasten 4 und 5 angezeigt werden, wohin der Benutzer durch Betätigung dieser Tasten gelangt. Beispielsweise kann oberhalb der Auswahltaste 4 der Text "zurück" und oberhalb der Auswahltaste 5 der Text "auswählen" zur Anzeige gebracht werden, um dem Benutzer diese Alternativen zu verdeutlichen.

Alternativ zu der Vorsehung separater Auswahltasten können auch bei Aufruf des Menüs andere Tasten der Eingabeeinrichtung 3 als Auswahltasten verwendet werden.

Weiterhin alternativ zu der gezeigten Vorgehensweise kann auch eine andere Anzahl von Auswahltasten vorgesehen sein, d.h. die Anzahl der Auswahltasten ist nicht auf vier beschränkt.

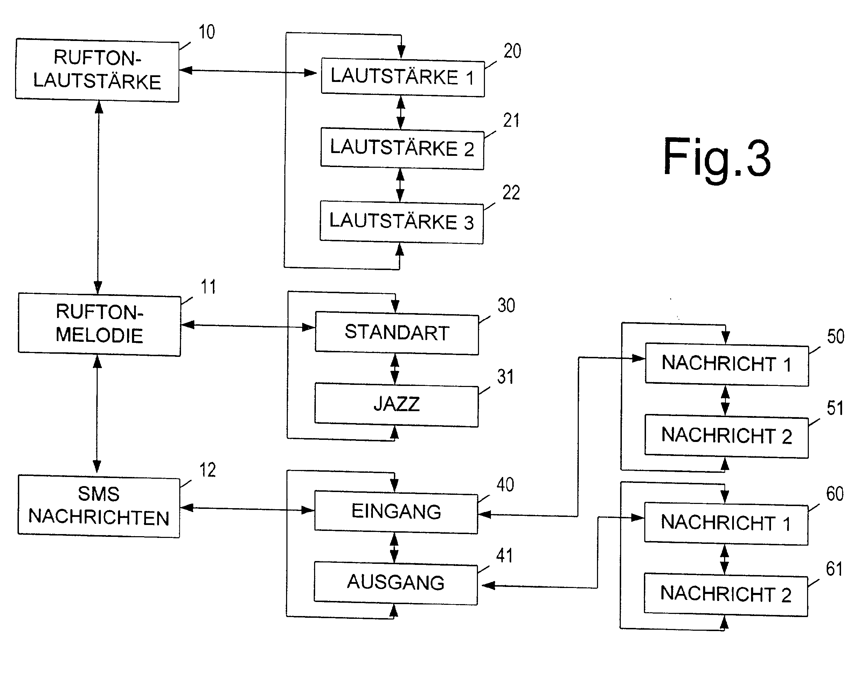

Die Figur 3 zeigt ein Menü für das in Figur 1 gezeigte Gerät.

Eine erste Menüebene umfasst den Menüpunkt 10 für die Ruftonlautstärke, den Menüpunkt 11 für die Ruftonmelodie und den Menüpunkt 12 für die SMS-Nachrichten.

Nach Aufruf des Menüs wird zunächst der Menüpunkt 10 auf der Anzeigeeinrichtung zur Anzeige gebracht. Der Benutzer des Gerätes kann nun durch Betätigung der Auswahltasten 6 oder 7 die anderen Menüpunkte 11 und 12 der ersten Menüebene auswählen. Durch Betätigung der Auswahltaste 4 kann er das Menü wieder verlassen. Durch Betätigung der Auswahltaste 5 kann er eines der Untermenüs einer zweiten Menüebene wählen.

Durch Betätigung der Auswahltaste 5 während der Anzeige des Menüpunktes 10 gelangt er in das Untermenü zur Einstellung der Ruftonlautstärke. Dieses Untermenü umfasst den Menüpunkt 20 zur Auswahl der Lautstärke auf den Pegel 1, den Menüpunkt 21 zur Einstellung der Lautstärke auf den Lautstärkepegel 2 und den Menüpunkt 22 zur Auswahl der Lautstärke mit dem Lautstärkepegel 3. Bei Auswahl dieses Untermenüs der zweiten Menüebene wird zunächst der Menüpunkt 20 angezeigt. Durch Betätigung der Auswahltasten 6 und 7 kann der Benutzer den von ihm gewünschten Lautstärkepegel auswählen, indem er den entsprechenden Menüpunkt zur Anzeige bringt. Wünscht er die Einstellung des Lautstärkepegels 3, kann er den entsprechenden Menüpunkt 22 durch zweimalige Betätigung der Auswahltaste 7 oder durch einmalige Betätigung der Auswahltaste 6 erreichen. Sobald der Menüpunkt 22 auf der Anzeigeeinrichtung 2 zur Anzeige gebracht ist, kann der Benutzer nun durch Betätigung der Auswahltaste 5 das Gerät auf den Lautstärkepegel 3 für die Ruftonlautstärke einstellen. Das Gerät nimmt diese Einstellung vor und bringt dann wieder den Ausgangspunkt diese Untermenüs, nämlich den Menüpunkt 10 zur Anzeige. Daraufhin kann der Benutzer noch andere Einstellungen vornehmen oder das Menü durch Betätigen der Auswahltaste 4 verlassen.

In der oben aufgezeigten Art und Weise kann der Benutzer durch Betätigung der Auswahltaste 5 bei Anzeige des Menüpunktes 11 das Menü zur Einstellung der Ruftonmelodie auswählen und dort mittels der Menüpunkte 30 für die Standardruftonmelodie oder dem Menüpunkt 31 für die Jazz-Ruftonmelodie die Ruftonmelodie entsprechend einstellen.

Schließlich kann er noch bei Betätigung der Auswahltaste 5 während der Anzeige des Menüpunktes 12 das Untermenü für die SMS-Nachrichten auswählen. Daraufhin bekommt er zunächst den Menüpunkt 40 zur Anzeige gebracht, der ihm die Möglichkeit gibt, die eingegangenen SMS-Nachrichten anzusehen. Bei Betätigung der Auswahltaste 6 während der Anzeige des Menüpunktes 40 gelangt er in ein weiteres Untermenü, mit den Menüpunkte 50 und 51, innerhalb dem er zwischen den eingegangenen SMS-Nachrichten auswählen kann, die dann auf einer weitere Betätigung der Auswahltaste bei Anzeige der entsprechenden Nachricht zur Anzeige gebracht werden.

In der selben Art und Weise kann er sich die versendeten SMS-Nachrichten ansehen, indem er den Menüpunkt 41 wählt und dann die Auswahltaste 5 drückt. Hierdurch gelangt er in das Untermenü für die versendeten SMS-Nachrichten mit den Menüpunkten 60 und 61, in dem er ebenfalls in der oben beschriebenen Art und Weise die von ihm gewünschte Nachricht zur Anzeige bringen kann.

Bei dem in Figur 3 gezeigten Menü handelt es sich selbstverständlich nur um ein Beispiel. Die in der Praxis verwendeten Menüs sind wesentlich umfangreicher und erlauben eine feinere Einstellung der einzelnen Parameter. Das in Figur 3 gezeigte Menü dient lediglich der Veranschaulichung der Erfindung.

Ebenso wie die Erfindung nicht auf das in Figur 1 gezeigte menügesteuerte Gerät beschränkt ist, ist die Erfindung selbstverständlich auch nicht auf die in dem Menü nach Figur 3 enthaltenen Menüpunkte beschränkt. Je nach dem verwendeten Gerät können völlig andere Menüpunkte zur Einstellung anderer Parameter Verwendung finden. Auch die Anzahl der Menüebenen ist keineswegs auf drei beschränkt.

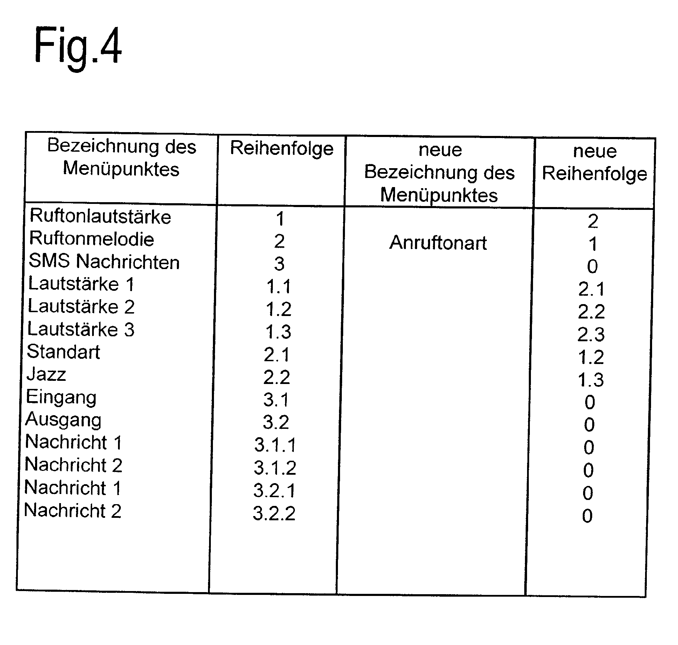

Die Figur 4 zeigt einen Menüplan zu dem in Figur 3 gezeigten Menü, wobei der Menüplan nach Figur 4 auch gleichzeitig zwei Spalten enthält, in die die Daten eines geänderten Menüs eingetragen werden können.

In der Spalte 1 des Menüplans nach Figur 4 finden sich die Bezeichnungen der Menüpunkte des Menüs nach Figur 3. In der zweiten Spalte des Menüplans nach Figur 4 ist die Reihenfolge der Menüpunkte der ersten Spalte angegeben.

Menüpunkte der ersten Menüebene haben eine einstellige Reihenfolge, Menüpunkte der zweiten Menüebene haben eine zweistellige Reihenfolge, wohingegen Menüpunkte der dritten Menüebene eine dreistellige Reihenfolge haben. Die einzelnen Stellen der Menüebenen können durch Punkte unterteilt sein.

Bei Aufruf der ersten Menüebene durch Aufruf des Menüs wird die in dem Menüplan angegebene Reihenfolge eingehalten, d.h. zunächst wird der Menüpunkt "Ruftonlautstärke" zur Anzeige gebracht. Durch Betätigung der Auswahltasten 6 und 7 können die Menüpunkte "Ruftonmelodie" und "SMS-Nachricht" zur Anzeige gebracht werden.

Wird beispielsweise beim Menüpunkt "Ruftonmelodie" der die Reihenfolge 2 hat, die Auswahltaste 5 betätigt, wird das erste Element des Untermenüs 2 zur Anzeige gebracht, welches die Reihenfolge 2.1 hat. Nach dem selben Schema lassen sich die anderen Menüpunkte zur Anzeige bringen.

Der Menüplan nach Figur 4 umfasst nun eine dritte Spalte, die mit "Neue Bezeichnung der Menüpunkte" überschrieben ist. Wird die Umbenennung eines der Menüpunkte gewünscht, kann hier die neue Bezeichnung eingetragen werden. Wird keine neue Bezeichnung eingetragen, wird die alte Bezeichnung des Menüpunktes verwendet.

Schließlich umfasst der Menüplan nach Figur 4 noch eine vierte Spalte, die mit "Neue Reihenfolge" überschrieben ist. In diese Spalte kann die neue Reihenfolge eingetragen werden, oder, wenn einzelne Elemente des Ursprungsmenüs nicht mehr gewünscht werden, dies durch Eintragung einer 0 gekennzeichnet werden.

Bei dem in Figur 4 gezeigten Ausführungsbeispiel wurde lediglich der Menüpunkt 11 mit der Bezeichnung "Ruftonmelodie" in "Anruftonart" umbenannt. Die Bezeichnung der übrigen Menüpunkte ist unverändert gelassen worden.

Dagegen wurden zwei Änderungen in der Reihenfolge vorgenommen und ein Menüpunkt der ersten Menüebene ist entfallen.

Der Menüpunkt "Ruftonmelodie" mit der neuen Bezeichnung "Anruftonart" ist nunmehr zum ersten Menüpunkt der ersten Menüebene geworden, wohingegen der Menüpunkt "Ruftonlautstärke" zum zweiten Menüpunkt der ersten Menüebene geworden ist.

Dementsprechend sind die Reihenfolgen der Menüpunkte "Lautstärke 1", "Lautstärke 2" und "Lautstärke 3" in 2.1, 2.2 und 2.3 umbenannt und die erste Ziffer der Menüpunkte für die Ruftonmelodien "Standard" und "Jazz" sind nunmehr 1.

Gleichzeitig wurde die Reihenfolge der Menüpunkte "Standard" und "Jazz" geändert, so dass der Menüpunkt "Standard" nunmehr die Reihenfolge 1.2 und der Menüpunkt "Jazz" die Reihenfolge 1.1 aufweist.

Der Menüpunkt "SMS-Nachrichten" der ersten Menüebene weist dagegen nunmehr die Reihenfolge 0 auf, d.h. er tritt in dem zur Anzeige gebrachten Menü nicht mehr in Erscheinung. Dementsprechend sind alle Menüpunkte der auf den Menüpunkt "SMS-Nachrichten" zurückgehenden Menüpunkte der zweiten und dritten Menüebene ebenfalls mit einer 0 versehen.

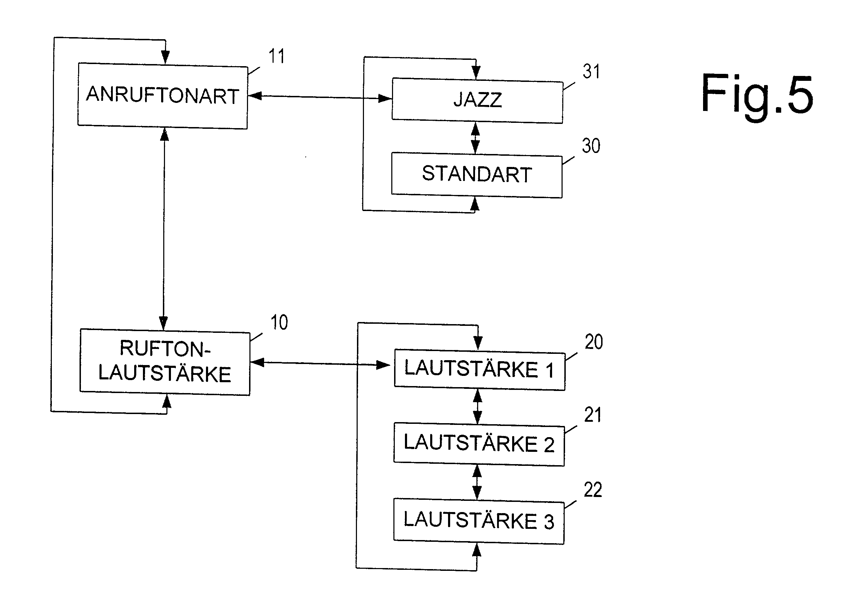

Daraus ergibt sich nun für das in der Figur 1 gezeigte Gerät das in Figur 5 gezeigte Menü. In der ersten Menüebene befinden sich nur noch die Menüpunkte 11 und 12, nämlich die Menüpunkte für "Anruftonart" und die "Ruftonlautstärke".

In dem auf den Menüpunkt 11 rückbezogenen Untermenü ist nun der Menüpunkt 31 für die Ruftonmelodie "Jazz" der erste Menüpunkt, wohingegen der Menüpunkt 20 für die Ruftonmelodie "Standard" der zweite Menüpunkt ist.

Das auf den Menüpunkt 10 rückbezogene Untermenü für die Einstellung der Ruftonlautstärke ist unverändert geblieben. Jedoch haben sich auch hier die in dem Menüplan angegebenen Reihenfolgen geändert, da sich die Menüpunkte 20, 21 und 22 nun nicht mehr auf den ersten Menüpunkt des Menüs der ersten Menüebene, sondern auf den zweiten Menüpunkt dieser Menüebene beziehen.

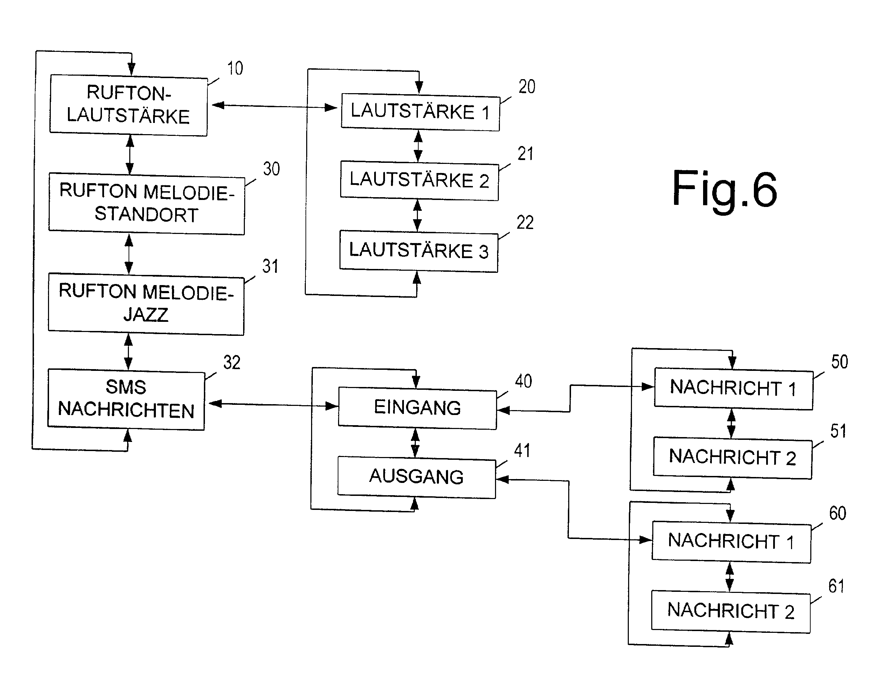

Bei dem in Figur 5 gezeigten Menü beschränken sich die Änderungen gegenüber dem Ursprungsmenü auf eine Umbenennung eines Menüpunktes sowie auf die Änderung der Reihenfolgen innerhalb der einzelnen Menüebenen. Die möglichen Änderungen sind aber nicht auf solche Änderungen beschränkt. Vielmehr können auch andere Änderungen vorgenommen werden. So kann z.B. auch die Menüebene der einzelnen Menüpunkte geändert werden, wie nachfolgend noch anhand der Figur 6 beschrieben wird, oder es können auch die Punkte verdoppelt werden, d.h. ein und derselbe Menüpunkt kommt in unterschiedlichen Menüebenen zum Aufruf.

Welche Änderungen in dem Ursprungsmenü vorgenommen werden, um zu dem geänderten Menü zu gelangen, hängt von der gewünschten Veränderung im Menü ab. Selbstverständlich kann dabei nur eine der aufgezeigten Alternativen Verwendung finden oder eine beliebige Mischung der aufgezeigten Alternativen.

In jedem Fall geht das neue Menü auf das ursprüngliche Menü zurück, d.h. es entsteht durch Abänderung bzw. Umkonfigurierung des ursprünglichen Menüs. Dies ist erforderlich, da anderenfalls das Gerät mit neuen Funktionen versehen werden müsste und auch die Änderung des Menüs weitaus komplizierter wäre, da für jeden Endmenüpunkt dann auch noch die Funktionen definiert werden müssten. In dem gezeigten Ausführungsbeispiel entspricht der geänderte Menüpunkt 11 für die Anruftonart vollständig dem ursprünglichen Menüpunkt 11 für die Ruftonmelodie. Lediglich die Reihenfolge, in der dieser Menüpunkt zur Anzeige gebracht wird und die dabei verwendete Bezeichnung wird variiert.

Ein weiteres Ausführungsbeispiel für ein geändertes Menü zeigt die Figur 6. Dieses Menü bedient dieselben Funktionen wie das Ausgangsmenü nach Figur 3 auf. Jedoch sind hier die Menüpunkte 30 und 31 in die erste Menüebene verschoben, wodurch in der ersten Menüebene der Menüpunkt 11 überflüssig wurde. Durch diese Änderung kann der Benutzer des Gerätes mit wenigen Tastenbetätigungen der Auswahltasten die gewünschte Ruftonmelodie einstellen.

Bei diesem Ausführungsbeispiel wurde des weiteren die Bezeichnung der Menüpunkte 30 und 31 in "Ruftonmelodie Standard" und "Ruftonmelodie Jazz" geändert, um diese Menüpunkte in der ersten Menüebene verständlich zu machen.

Alternativ hierzu hätte auch der Menüpunkt 11 in der ersten Menüebene verbleiben können und die Menüpunkte 30 und 31 in der zweiten Menüebene bleiben können, aber gleichzeitig der Menüpunkt 30 verdoppelt und in die Menüebene 1 verschoben werden können. Bei einer solchen Änderung wäre es für den Benutzer einfach, die Ruftonmelodie wieder auf die Ruftonmelodie "Standard" zurückzustellen, aber durch Auswahl des Menüpunktes 11 eine Einstellung auf eine andere Ruftonmelodie vornehmen zu können.

Der in Figur 4 gezeigte Menüplan wird in einer in den Figuren nicht gezeigten Speichereinrichtung abgelegt. Die Speichereinrichtung kann Bestandteil des in Figur 1 gezeigten Gerätes selbst oder eines anderen Gerätes sein. Handelt es sich bei dem menügesteuerten Gerät beispielsweise um einen Telefonapparat, kann die Speichereinrichtung zur Speicherung des Menüplans in der Nebenstellenanlage abgelegt sein.

Ebenso kann eine Steuereinrichtung zur Anzeige des Menüs auf der Anzeigeeinrichtung entweder Bestandteil des in der Figur 1 gezeigten Gerätes oder Bestandteil eines anderen Gerätes sein. Im Falle eines Tischtelefons könnte dies wiederum die Nebenstellenanlage sein, an die dieses Telefon angeschlossen ist.

Die Möglichkeit, sowohl den Menüplan als auch die Steuereinrichtung zur Anzeige des Menüs auf der Anzeigeeinrichtung in einem anderen Gerät als dem durch das Menü gesteuerten Gerät vorzusehen, umfasst des weiteren auch die Möglichkeit, den Menüplan in einem anderen als dem menügesteuerten Gerät zu ändern. Handelt es sich dabei um einen PC, kann der Menüplan auf einfache Art und Weise auf dem Bildschirm des PCs geändert werden, was den Vorgang der Änderung vereinfacht.

Der Menüplan nach Figur 4 kann noch mehrere Spalten enthalten, in denen dann weitere, anders geänderte Menüs angegeben sind. In diesem Fall stehen für das menügesteuerte Gerät eine Mehrzahl von Menüs zur Verfügung. Diese können dann gegebenenfalls mittels der Eingabeeinrichtung gewählt werden.

Gleichzeitig ist es aber auch möglich, vorbestimmte Menüpläne unterschiedlichen Benutzern des Gerätes zuzuordnen. Wird vom Benutzer vor Benutzung beispielsweise eine persönliche Identifikationsnummer (PIN) eingegeben, erkennt das Gerät den jeweiligen Benutzer und kann ihm dann automatisch den entsprechenden Menüplan zuordnen.

Vorteilhafter weise ist bei dem Gerät über die bisher geschilderten Merkmale hinaus noch eine Funktion vorgesehen, mit der der Benutzer des Gerätes das Gerät wieder auf einen werksseitigen ursprünglichen Menüplan zurückstellen kann. Dies kann beispielsweise durch die Betätigung einer vorbestimmten Tastenkombination der Eingabeeinrichtung erfolgen. Diese Möglichkeit ist von Vorteil, wenn der Benutzer seinen eigenen Menüplan nicht mehr versteht oder aber das Gerät weiterverkauft werden soll, was vorteilhafter Weise in dem Ursprungszustand des Gerätes am einfachsten ist, da dann die Bedienungsanleitung des Gerätes wieder voll zutreffend ist.

Ein weiteres Merkmal des erfindungsgemäßen Gerätes ist, dass ein geänderter Menüplan automatisch auf Ausführbarkeit geprüft wird. Da die Reihenfolge der Menüpunkte frei wählbar ist, können sich bei den vom Benutzer eingegebenen Reihenfolgen leicht Fehler einschleichen, die dann in einem unausführbaren Zustand enden. Aus diesem Grund kann der Menüplan bereits während der Änderung oder nach Fertigstellung der Änderung automatisch auf Ausführbarkeit geprüft werden.

Gezeigt wird ein menügesteuertes Gerät mit einer Anzeigeeinrichtung zur Anzeige eines Menüpunkte und einer Eingabeeinrichtung mit einer Mehrzahl von Auswahltasten. Durch Betätigung der Eingabeeinrichtung wird ein durch einen Menüplan festgelegter anderer Menüpunkt zur Anzeige gebracht. Hierzu wird vorgeschlagen, dass der Menüplan geändert werden kann. Diese Änderungen erfolgen vorzugsweise durch Eingaben des Benutzers an der Eingabeeinrichtung. Eine Änderung des Menüplans kann durch eine Änderung der Reihenfolge der Menüpunkte des Menüplanes, durch eine Änderung der Menüebene der Menüpunkte, durch das Weglassen von Menüpunkten, durch das Hinzufügen von Menüpunkten oder durch die Umbenennung der Menüpunkte erfolgen. Selbstverständlich kann der Menüplan durch eine oder eine beliebige Anzahl der genannten Maßnahmen geändert werden.

## Patentansprüche

1. Menügesteuertes Gerät mit
einer Anzeigeeinrichtung zur Anzeige eines Menüpunktes und
einer Eingabeeinrichtung mit einer Mehrzahl von Auswahltasten,
wobei durch Betätigung der Eingabeeinrichtung ein durch einen Menüplan festgelegter anderer Menüpunkt zur Anzeige gebracht werden kann,
**dadurch gekennzeichnet,**
**dass** der Menüplan geändert werden kann.

2. Menügesteuertes Gerät nach Anspruch 1, **dadurch gekennzeichnet, dass** der Menüplan durch eine Änderung der Reihenfolge der Menüpunkte des Menüplans geändert wird.

3. Menügesteuertes Gerät nach Anspruch 1 oder 2, **dadurch gekennzeichnet, dass** der Menüplan geändert wird, indem die Menüebene der Menüpunkte geändert wird.

4. Menügesteuertes Gerät nach einem der vorhergehenden Ansprüche, **dadurch gekennzeichnet, dass** der Menüplan durch Weglassen von Menüpunkten geändert wird.

5. Menügesteuertes Gerät nach einem der vorhergehenden Ansprüche, **dadurch gekennzeichnet, dass** der Menüplan durch weitere Menüpunkte erweitert wird.

6. Menügesteuertes Gerät nach einem der vorhergehenden Ansprüche, **dadurch gekennzeichnet, dass** der Menüplan durch Umbenennung der Menüpunkte geändert wird.

7. Menügesteuertes Gerät nach einem der vorhergehenden Ansprüche, **dadurch gekennzeichnet, dass** das Gerät wahlweise nach einem von einer Mehrzahl von unterschiedlichen Menüplänen arbeiten kann.

8. Menügesteuertes Gerät nach Anspruch 7, **dadurch gekennzeichnet, dass** mittels der Eingabeeinrichtung der zu verwendende Menüplan gewählt werden kann.

9. Menügesteuertes Gerät nach Anspruch 7 oder 8, **dadurch gekennzeichnet, dass** mittels der Eingabeeinrichtung der werksseitig ursprüngliche Menüplan gewählt werden kann.

10. Menügesteuertes Gerät nach einem der Ansprüche 7 bis 9, **dadurch gekennzeichnet, dass** das Gerät einen vorbestimmten Menüplan entsprechend einer vom Benutzer eingegebenen PIN auswählt.

11. Menügesteuertes Gerät nach einem der vorhergehenden Ansprüche, **dadurch gekennzeichnet, dass** ein geänderter Menüplan automatisch auf Ausführbarkeit geprüft wird.

12. Menügesteuertes Gerät nach einem der vorhergehenden Ansprüche, **dadurch gekennzeichnet, dass** der Menüplan Angaben über die Menüebene und die Reihenfolge der Menüpunkte enthält.

13. Menügesteuertes Gerät nach einem der vorhergehenden Ansprüche, **dadurch gekennzeichnet, dass** die Anzeigeeinrichtung zur Anzeige eines einzigen Menüpunktes vorgesehen ist.
